# EUROPÄISCHE PATENTSCHRIFT

(11) **EP 0 772 477 B1**
(45) Veröffentlichungstag und Bekanntmachung des Hinweises auf die Patenterteilung: **24.03.1999**
(21) Anmeldenummer: 95927695.7
(22) Anmeldetag: 21.07.1995
(51) Int. Cl.: A62C 2/04, F16K 17/38, F16K 17/12

(54) **VORRICHTUNG ZUM AUTOMATISCHEN SCHLIESSEN EINER ABSPERRARMATUR**
DEVICE FOR THE AUTOMATIC CLOSURE OF A SHUT-OFF FITTING
DISPOSITIF DE FERMETURE AUTOMATIQUE D'UNE ROBINETTERIE D'ARRET

(30) Priorität: 22.07.1994 DE 4426095
(43) Veröffentlichungstag der Anmeldung: 14.05.1997
(73) Patentinhaber: RUHRGAS AKTIENGESELLSCHAFT, 45138 Essen (DE)
(72) Erfinder: LEMBSER, Gerhard, D-53639 Königswinter (DE)
(74) Vertreter: Harlacher, Mechthild
(86) Internationale Anmeldenummer: EP9502889
(87) Internationale Veröffentlichungsnummer: WO9603180

(56) Entgegenhaltungen:
- EP-A- 0 637 457
- US-A- 3 985 151
- US-A- 4 469 124
- US-A- 5 240 034

## Beschreibung

Die Erfindung betrifft eine Vorrichtung zum automatischen Schließen einer in einer Leitungsanlage angeordneten Absperrarmatur bei Über- oder Unterschreitung eines zulässigen Druckes in der Leitungsanlage, mit einem Absperrelement, mit mindestens einem eine Schließkraft hemmenden Element, das das Absperrelement in Offenstellung hält, und wobei das Element mindestens einen druckbeaufschlagten volumenveränderlichen Hohlkörper aufweist.

Leitungsanlagen, die zur Durchleitung, Bearbeitung oder Speicherung von Gasen oder Flüssigkeiten durchströmt werden, beispielsweise in der Gasindustrie, müssen mit Sicherheitsabsperreinrichtungen ausgerüstet sein, die ein unzulässiges Über- oder Unterschreiten des zulässigen Betriebsdruckes durch Unterbrechung des Gasflusses sicher verhindern. Dieses wird durch ein schnelles Schließen einer Sicherheitsabsperreinrichtung erreicht. Die nachgeschaltete Leitungsteilanlage wird dadurch gegen einen unzulässigen Druckzustand gesichert.

Sicherheitsabsperrarmaturen gibt es in verschiedenen Bauarten und Bauformen. Bei der allgemein in der Gasversorgung üblichen Bauart wird das Absperrelement durch eine mechanische Arretierung in Offenstellung gehalten. Bei Überschreitung des zulässigen Druckes in der Leitungsanlage löst ein mechanisch-pneumatisches Regelgerät die mechanische Sperre und bewirkt so ein Schließen des Stellgliedes. Das Regelgerät ist dabei über eine Meßleitung mit dem der Sicherheitsabsperrarmatur in Fließrichtung nachgeschaltetenen Anlagenteil verbunden. Bei Gas-Druckregelanlagen ist das Sicherheitsabsperrsystem häufig derart ausgebildet, daß zwei nacheinander angeordnete Sicherheitsabsperrarmaturen mit separaten Meßleitungen eingesetzt werden. Derartige Systeme sind in bezug auf die Anschaffungskosten und den Wartungs- sowie Instandhaltungsaufwand sehr kostenintensiv.

Aus der nicht vorveröffentlichten EP-A-637 457 ist eine Vorrichtung zum automatischen Schließen einer in einer Leitungsanlage angeordneten Absperrarmatur mit einem Absperrelement bekannt. Das Absperrelement wird durch ein eine Schließkraft hemmendes Element in Offenstellung gehalten, wobei das Element von mindestens einem druckbeaufschlagten volumenveränderlichen Hohlkörper gebildet wird. Diese Vorrichtung ist dazu geeignet, bei ungewöhnlichem Temperaturanstieg in deren Umgebung ein selbsttätiges Schließen der Absperrarmatur zu bewirken. Nachteilig ist, daß der automatische Schließmechanismus im Falle des Über- oder Unterschreitens des zulässigen Druckes in der Leitungsanlage nicht wirksam wird.

Der Erfindung liegt daher die Aufgabe zugrunde, eine insbesondere im Hochdruckbereich einsetzbare automatische Absperrvorrichtung einfacher und kostengünstiger Bauweise zu schaffen, die bei Über- oder Unterschreitung eines zulässigen Betriebsdruckes zuverlässig und selbsttätig das Schließen einer Absperrarmatur bewirkt.

Erfindungsgemäß wird diese Aufgabe bei einer Absperrarmatur der eingangs genannten Art dadurch gelöst, daß der Hohlkörper mit mindestens einer zu öffnenden Abblasevorrichtung verbunden ist, die eine Auslösevorrichtung aufweist, daß der Auslösevorrichtung über eine Meßleitung der Betriebsdruck der Leitungsanlage zuführbar ist, und daß die Auslösevorrichtung bei Über- oder Unterschreitung des zulässigen Druckes in der Leitungsanlage das Öffnen der Abblasevorrichtung bewirkt.

Eine derartige Schließvorrichtung hat den Vorteil, daß sie sich aufgrund ihrer einfachen und robusten Konzeption mit verschiedenartigen handelsüblichen Absperrarmaturen kombinieren läßt und somit vielseitig einsetzbar ist. Die Schließvorrichtung kann beispielsweise zur Absicherung von Meß-, Druckregel-, Verdichter-, Verteiler- oder Speicheranlagen sowie in verfahrenstechnischen Anlagen eingesetzt werden.

Die Absperrarmatur wird durch ein die Schließkraft hemmendes Element in Offenstellung gehalten. Vorteilhafterweise kann das Element direkt vom druckbeaufschlagten volumenveränderlichen Hohlkörper gebildet werden, während die Schließkraft z. B. von der Gewichtskraft eines ruhenden Körpers oder von einer gespannten Feder aufgebracht wird. Der Hohlkörper ist mit einer Abblasevorrichtung verbunden, welcher der Betriebsdruck der Leitungsanlage zugeführt wird. Bei Über- oder Unterschreiten des zulässigen Druckes in der Leitungsanlage wird der Schließvorgang ausgelöst, in dem die auf den zulässigen Druck eingestellte Abblasevorrichtung öffnet und ein Druckabbau im Hohlkörper eintritt.

Hierdurch verringert sich die Druckkraft im Hohlkörper, so daß die Schließkraft in Abhängigkeit von der Armaturenkonzeption direkt auf ein Absperrelement wirken kann oder den Schließvorgang indirekt über eine Betätigungsvorrichtung auslöst, so daß der Durchfluß des Fluids unterbrochen wird.

Die erfindungsgemäße Vorrichtung bildet ein selbsttätig wirkendes wartungsarmes Sicherheitsabsperrsystem, wobei beispielsweise bei einer Gas-Druckregelanlage die eingangsseitig angeordnete Absperrarmatur mit einer erfindungsgemäßen Schließvorrichtung ein unzulässiges Überschreiten des höchstzulässigen Druckes auf der Ausgangsseite verhindert. Als Hohlkörper eignen sich beispielsweise marktgängige volumenveränderliche Druckbehälter aus diversen Materialien. Der Hohlkörper wird in der Regel außerhalb des Armaturengehäuses angeordnet, läßt sich jedoch auch in das Gehäuse integrieren.

Zum Ausgleich möglicher Leckverluste kann der Hohlkörper z. B. mit einem Druckbehälter verbunden werden. Dieser kann als Druckpuffer dienen oder einen Druck aufweisen, der höher als der im Hohlkörper ist. Hierbei ist im Anschluß zwischen Druckbehälter und Hohlkörper eine Druckregelarmatur erforderlich.

Als Abblaseeinrichtung können handelsübliche den gültigen Vorschriften entsprechende Sicherheitsabblaseventile verwendet werden. Der Druck in der Rohrleitung kann direkt oder indirekt auf das Sicherheitsabblaseventil übertragen werden.

Der Abblasevorrichtung kann der Betriebsdruck erfindungsgemäß über eine Meßleitung zugeführt werden, so daß der Betriebsdruck direkt an der Abblasevorrichtung ansteht. Vorteilhafterweise bewirkt diese Verbindung, daß sich die Schließvorrichtung eigensicher und ohne Einsatz von Hilfsenergie betreiben läßt. Eine elektrische Ansteuerung der Abblaseeinrichtung mittels einem Signal von einem Druckgeber ist ebenfalls möglich.

Die Abblasevorrichtung kann erfindungsgemäß über eine Funktionsleitung mit dem Hohlkörper verbunden sein, wobei die Funktionsleitung aus einem Material besteht, dessen Schmelztemperatur auf eine definierte Grenzwerttemperatur eingestellt ist. Eine derartig ausgebildete Funktionsleitung hat den Vorteil, daß ein im Anlagenbereich auftretender Brand das Schmelzen der Funktionsleitung bewirkt und dieses ebenfalls einen Druckabfall im Hohlkörper und somit ein Auslösen des Schließvorgangs zur Folge hat. Die Funktionsleitung läßt sich beispielsweise in einer Meß- und Regelanlage derartig anordnen, daß sie sich über das gesamte Anlagensystem erstreckt. Hierdurch wird erreicht, daß die Absperrarmatur sowohl bei Über- oder Unterschreitung eines zulässigen Druckes als auch bei unzulässig hohen Temperaturen selbsttätig schließt. Durch die Kombination dieser Funktionen lassen sich die Herstellungskosten sowie der Aufwand für Instandhaltung und Wartung gegenüber den herkömmlichen Sicherheitsabsperr- und Feuer-Notaus-Systemen erheblich verringern, weil bei diesen die unterschiedlichen Funktionen von separaten Sicherheitseinrichtungen ausgeführt werden.

Die Ausbildung als Funktionsleitung hat den Vorteil, daß sich die Reaktionszeit in bezug auf eine Brandbekämpfung auf ein Minimum reduziert. Funktionsleitung und Hohlkörper sollten weitestgehend frei von lösbaren Verbindungen sein, damit mögliche Quellen für Undichtigkeiten vermieden werden.

Insbesondere dann, wenn die Schließvorrichtung in Verbindung mit einer im Ausgangsbereich der Anlage angeordneten Rückströmsicherung oder einer weiteren erfindungsgemäßen Schließvorrichtung eingesetzt wird, kann der von einer Druckstötung oder einem Brand betroffene Anlagenbereich schnell und sicher vom übrigen System abgetrennt werden. Im übrigen ließe sich dadurch auch der bisher übliche Sicherheitsabstand zwischen Brandarmatur und Anlage verringern.

Nach einem weiteren vorteilhaften Merkmal der Erfindung wird die Schließkraft von einem Betätigungselement aufgebracht, welches an einer Betätigungsvorrichtung angreift. Dadurch wird erreicht, daß die Schließvorrichtung mit handelsüblichen Armaturen unterschiedlicher Bauart (Klappen, Ventile, Schieber, Hähne etc.) kombinierbar ist. Die Betätigungsvorrichtung hat die Aufgabe, die Bewegung des Betätigungselementes auf das Absperrelement der Armatur zu übertragen. Die Umwandlung einer Abwärtsbewegung des Betätigungselementes in eine Drehbewegung kann z. B. auf sehr einfache Weise über Gelenke, Zahnräder oder eine am Armaturengetriebe angreifende Zahnstange erfolgen. Der Hohlkörper greift erfindungsgemäß ebenfalls an der Betätigungsvorrichtung oder direkt an dem Betätigungselement an, so daß die Absperrarmatur auch als Betriebsarmatur genutzt werden kann und sich somit die Kosten für eine zusätzliche Absperrarmatur einsparen lassen.

In Weiterbildung der Erfindung weist der Hohlkörper eine Überwachungseinrichtung auf, welche eine Kontrolle der Funktionsbereitschaft der Schließvorrichtung ermöglicht. Eine einfache Form der Überwachung ist die Druckmessung, wobei hier der Innendruck im Hohlkörper erfaßt wird. Die Überwachung beschränkt sich nicht nur auf den Hohlkörper. Beispielsweise kann die Stellung des Absperrelementes überwacht werden, d. h., bei Abweichung von der Offenstellung wird ein entsprechendes Signal erzeugt und weitergeleitet. Der gemessene Druck und/oder das Stellungssignal können angezeigt oder in ein komplexes Überwachungssystem übertragen werden, so daß sich Störungen frühzeitig erkennen lassen und die Einleitung von Gegenmaßnahmen erfolgen kann.

Weiterhin läßt sich die Erfindung vorteilhaft ausgestalten, in dem zwei oder mehr Hohlkörper hintereinander und die zugehörigen Reaktionsleitungen parallel zueinander angeordnet sind. Eine derartige Ausführungsform hat den Vorteil, daß systembedingte Fehlauslösungen nahezu ausgeschlossen werden. Eine störungsbedingte Reduzierung des Druckes in einem Hohlkörper hat lediglich die Teilschließung der Absperrarmatur und somit maximal eine Druckflußreduzierung zur Folge.

Geht man - wie in der Technik üblich - davon aus, daß systembedingte zeitgleiche Störungen an zwei unabhängig voneinander wirkenden Systemen mit hoher Wahrscheinlichkeit auszuschließen sind, braucht ein störungsbedingter Ausfall der Anlage bei paralleler Ausführung nicht in Betracht gezogen werden. Die Auslösung eines entsprechenden Warnsignals wäre somit ausreichend. Das völlige Schließen der Absperrarmatur kann folglich nur bestimmungsgemäß bei Überschreiten der Druckgrenzwerte oder der definierten Grenzwerttemperatur in Folge übermäßiger Hitzeentwicklung (Brand) oder durch Vorsatz erfolgen.

In Weiterbildung der Erfindung ist das Betätigungselement, die Betätigungsvorrichtung oder das Absperrelement mittels einer Arretierung feststellbar, wodurch die selbsttätige Auslösung der Vorrichtung im Fall von Wartungs- oder Reparaturarbeiten verhindert wird. Durch die Arretierung des Betätigungselementes wird fernerhin erreicht, daß die Absperrarmatur unabhängig von der automatischen Schließvorrichtung betätigt werden kann.

Der Hohlkörper kann erfindungsgemäß als Zylinder ausgebildet sein, dessen Volumen mittels eines Kolbens veränderbar und der über eine Kolbenstange mit der Betätigungsvorrichtung verbunden ist. Eine derartige Ausgestaltung hat den Vorteil, daß sich die Vorrichtung kostengünstig aus handelsüblichen Bauteilen fertigen läßt.

Nach einem weiteren vorteilhaftem Merkmal der Erfindung kann der Hohlkörper als Faltenbalg oder als elastisches Druckkissen ausgebildet sein. Dadurch läßt sich beispielsweise ein als Betätigungselement wirkender Körper direkt auf dem Hohlkörper anordnen. Bei einem Druckabfall im Hohlkörper wird dieser von der Gewichtskraft des sich abwärts bewegenden Körpers zusammengedrückt, d. h., die Schließkraft wird wirksam. Anders verhält es sich bei einem vorgespannten Faltenbalg, der sich durch eine Druckbeaufschlagung in seiner Länge ausdehnt und sich bei Druckabnahme wieder zusammenzieht. In diesem Fall ist der Hohlkörper gleichzeitig auch das Betätigungselement, so daß vorteilhafterweise auf ein zusätzliches Element verzichtet werden kann.

Als weiteres Merkmal schlägt die Erfindung vor, daß im Eingang und im Ausgang der Leitungsanlage je eine Absperrarmatur angeordnet ist und daß die Leitungsanlage zwischen den Absperrarmaturen mit mindestens einer Entleerungsarmatur verbunden ist, die ein Absperrelement aufweist, mit mindestens einem eine Öffnungskraft hemmenden druckbeaufschlagten Hohlkörper, der das Absperrelement in Geschlossenstellung hält, daß der Hohlkörper mit der Funktionsleitung verbunden ist, und daß ein Druckabfall in der Funktionsleitung einen Druckabfall im Hohlkörper bewirkt, so daß die Entleerungsarmatur öffnet.

Eine derartige Ausbildung ermöglicht insbesondere bei Leitungsanlagen, durch die ein brennbares Produkt strömt, daß die Funktionsleitung infolge eines Produktbrandes schmilzt und ein selbsttätiges Schließen der Absperrarmaturen und ein Öffnen der Entleerungsarmatur ausgelöst wird. Dadurch kann weniger Produkt über die Schadensstelle entweichen, so daß sich die Branddauer erheblich verkürzt. Durch die zeitliche Begrenzung des Produktbrandes wird der Schaden auf Bauteile im unmittelbaren Bereich der Schadensstelle begrenzt.

Die Vorrichtung zum automatischen Öffnen der Entleerungsarmatur besteht aus den gleichen Komponenten wie die Schließvorrichtung und hat dieser gegenüber lediglich eine umgekehrte Funktion.

Zur Vermeidung von systembedingten Fehlauslösungen ist es von Vorteil, wenn die Absperrarmaturen und die Entleerungsarmatur jeweils zwei Hohlkörper aufweisen, die hintereinander angeordnet sind und im weiteren Text als erster und zweiter Hohlkörper bezeichnet werden. Durch eine gemeinsame erste Funktionsleitung sind die ersten Hohlkörper miteinander verbunden und bilden ein gemeinsames Funktionssystem. Ebenso sind die zweiten Hohlkörper über eine gemeinsame zweite Funktionsleitung miteinander verbunden.

Durch diese Ausbildung wird vermieden, daß bei fehlerhaft ausgelöstem Druckabfall in nur einer der beiden Funktionsleitungen die Absperrarmaturen selbsttätig schließen sowie die Entleerungsarmatur öffnet. Der Schließ- sowie Öffnungsmechanismus wird erst wirksam, wenn der Druck aus allen Hohlkörpern entweicht. Zur Erkennung von systembedingten Fehlauslösungen sollte der Druckabfall in diesem Funktionssystem eine Warnmeldung bewirken. Damit im Brandfall beide Funktionssysteme nahezu gleichzeitig reagieren, sind deren Funktionsleitungen parallel zueinander angeordnet.

In Abhängigkeit von der geforderten Entleerungsdauer und dem zu entleerenden Anlagenvolumen sind die Nennweiten von Entleerungsarmatur und deren Zuleitung zu wählen.

Vorzugsweise wird der Druckabfall im Hohlkörper mittels eines Drosselgliedes verzögert. Dadurch entweicht der Druck aus dem Hohlkörper der Entleerungsarmatur langsamer als der Druck aus den Hohlkörpern der Absperrarmaturen. Das Drosselglied wird beispielsweise als Querschnittsverengung in Form einer mit einer Bohrung versehenen Scheibe, als reduzierter Anschlußdurchmesser oder als zum Teil geschlossene Absperrarmatur ausgebildet.

Eine weitere vorteilhafte Ausgestaltung der Erfindung bilden zwei in Reihe angeordnete Entleerungsarmaturen, die jeweils durch einen Hohlkörper in Geschlossenstellung gehalten werden. Durch zwei hintereinander angeordnete Entleerungsarmaturen wird sichergestellt, daß auch dann kein Gas aus der Leitungsanlage entweicht, wenn eine Entleerungsarmatur undicht wird. Ebenso werden systembedingte Fehlauslösungen vermieden, weil beide Hohlkörper an unterschiedliche Funktionsleitungen angeschlossen sind und die druckführende Leitungsanlage erst entspannt wird, wenn beide Entleerungsarmaturen geöffnet sind.

Anstelle einer ausgangsseitig angeordneten Absperrarmatur mit einer erfindungsgemäßen Schließvorrichtung ist auch der Einsatz einer handelsüblichen Rückschlagklappe denkbar.

Nachstehend ist die Erfindung anhand von drei in der Zeichnung wiedergegebenen Ausführungsbeispielen beschrieben. Die Zeichnung zeigt in:
- Fig. 1: eine schematische Anordnung einer Schließvorrichtung vor einer Druckregeleinrichtung.
- Fig. 2: einen schematischen Aufbau einer Gas-Druckregelanlage mit einer Schließvorrichtung.
- Fig. 3: einen schematischen Aufbau einer Gas-Druckregelanlage mit selbsttätiger Schließ- und Öffnungsvorrichtung.

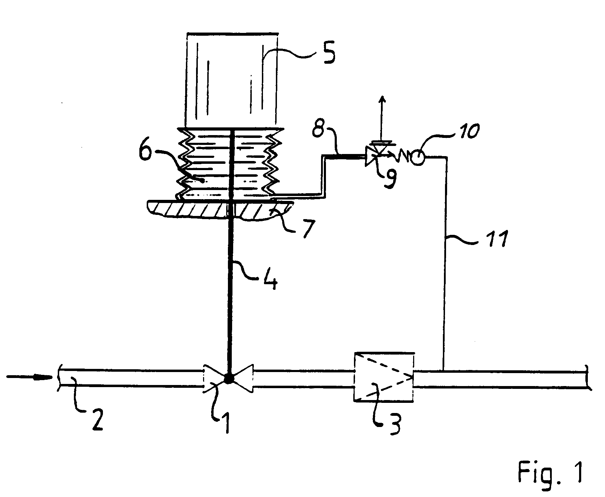

Die in Fig. 1 gezeigte Absperrarmatur 1 ist in einer Rohrleitung 2 flußauf einer Druckregeleinrichtung 3 angeordnet. Die Absperrarmatur 1 weist eine Betätigungsvorrichtung 4 auf, über die das nicht dargestellte Absperrelement der Absperrarmatur 1 bewegt werden kann. Im Betriebszustand wird das Absperrelement in Offenstellung gehalten, und zwar dadurch, daß der von einem Betätigungselement in Form eines ruhenden Körpers 5 aufgebrachten Schließkraft ein druckbeaufschlagter volumenänderlicher Hohlkörper 6 entgegenwirkt, der als Faltenbalg ausgebildet und zwischen dem Körper 5 und einem festen Untergrund 7 angeordnet ist. Der Faltenbalg 6 ist über eine Anschlußleitung 8 mit einer Abblasevorrichtung 9 unabsperrbar verbunden. Eine auf die zulässigen Druckgrenzwerte eingestellte Auslösevorrichtung 10 der Abblasevorrichtung 9 ist über eine Meßleitung 11 mit der Rohrleitung unabsperrbar verbunden, und zwar flußab der Druckregeleinrichtung 3.

Durch diese Anordnung wird sichergestellt, daß die Auslösevorrichtung 10 bei Über- oder Unterschreitung des zulässigen Betriebsdruckes ein Öffnen der Ausblasevorrichtung 9 bewirkt, so daß die Druckluft hierüber entweichen kann und der Druck in dem Faltenbalg 6 abnimmt. Dadurch verringert sich die der Schließkraft entgegenwirkende Kraft, so daß der Körper 5 seine Ruheposition verläßt und sich abwärts bewegt. Über die Betätigungsvorrichtung 4 wird die Abwärtsbewegung auf das Absperrelement übertragen, in dem diese in eine Drehbewegung umgewandelt wird. Sobald der Faltenbalg 6 auf seine Mindestgröße zusammengedrückt ist, hat der Körper 5 seine Endposition erreicht und das vollständige Schließen der Absperrarmatur 1 bewirkt. Der Gasfluß bleibt unterbrochen, bis die Schließvorrichtung wieder in den Betriebszustand zurückversetzt wird.

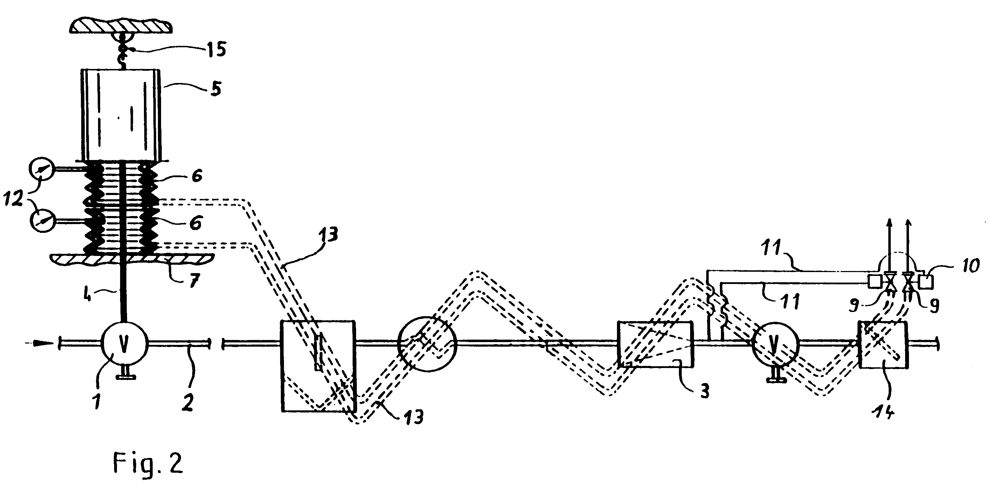

Fig. 2 zeigt eine Gas-Druckregelanlage mit einer in einer Gasleitung 2 angeordneten Absperrarmatur 1. Diese befindet sich im Eingangsbereich der Gas-Druckregelanlage, wobei der Sicherheitsabstand zwischen den zur Regelanlage gehörenden Anlagenteilen und der Absperrarmatur 1 von den jeweiligen Vorschriften, Auflagen und/oder Gegebenheiten abhängig ist.

Das nicht dargestellte Absperrelement (Ventilteller) der Absperrarmatur 1 ist fest mit einer Betätigungsvorrichtung 4 verbunden. Über diese wird das Absperrelement in Offenstellung gehalten, wobei der auf die Betätigungsvorrichtung 4 wirkenden Schließkraft zwei druckluftbeaufschlagte, hintereinander angeordnete Hohlkörper in Form von Faltenbälgen 6 hemmend entgegenwirken. Die Schließkraft wird hier von dem Gewicht eines ruhenden Körpers 5 gebildet, wobei auch andere Lösungen, wie beispielsweise der Einsatz einer gespannten Feder oder die Verwendung vorgespannter Faltenbälge denkbar sind. Jeder der Faltenbälge 6 weist eine den Innendruck messende Meßvorrichtung 12 auf.

Des weiteren weist jeder Faltenbalg 6 eine Funktionsleitung 13 in Form einer kleindimensionierten Rohrleitung auf, wobei jeder Faltenbalg 6 mit der zugehörigen Funktionsleitung 13 ein in sich geschlossenes System bildet. Als Funktionsleitungen 13 eignen sich beispielsweise handelsübliche Aluminiumrohre oder Schlauchleitungen. Die beiden parallel zueinander angeordneten Funktionsleitungen 13 sind schlangenlinienartig oberhalb aller zu überwachenden Anlagenteile der Regelanlage angeordnet. Jede Funktionsleitung 13 weist eine separate Sicherheitsabblaseeinrichtung 9 mit einer Auslösevorrichtung 10 auf. Die Auslösevorrichtungen 10 sind über Meßleitungen 11 mit der Gasleitung 2 unabsperrbar verbunden, und zwar flußab einer Druckregeleinrichtung 3. Im Ausgang der Gas-Druckregelanlage ist eine Rückströmsicherung 14 angeordnet.

Bei Über- oder Unterschreiten des zulässigen Betriebsdruckes auf der Ausgangsseite der Gasdruckregeleinrichtung 3 öffnen die Sicherheitsabblaseeinrichtungen 9, so daß die Druckluft entweichen kann und der Druck in den Faltenbälgen 6 abnimmt. Dadurch verringert sich die der Gewichtskraft des Körpers 5 entgegenwirkende Kraft, der Körper 5 verläßt seine Ruheposition und bringt über die Betätigungsvorrichtung 4 das Absperrelement in seine Schließposition. Hierdurch wird der Gasfluß unterbrochen.

Des weiteren wird die Gasdruckregelanlage durch die Funktionsleitungen 13 derart überwacht, daß die Absperrarmatur 1 im Brandfall ebenfalls selbsttätig schließt.

Wenn an einer oder mehreren Stellen der Regelanlage Gas austritt und sich entzündet, wird im Flammenbereich die Grenz- bzw. Schmelztemperatur der Funktionsleitungen 13 überschritten. Da sich diese aufgrund ihrer Anordnung über die gesamte Regelanlage erstrecken, ist davon auszugehen, daß die thermische Belastung die Reaktionsleitungen 13 sofort und unmittelbar erreichen und diese zumindest im Bereich des Brandherdes schmelzen werden. Schon während des Schmelzvorganges ist davon auszugehen, daß die Funktionsleitungen 13 dem Innendruck nicht standhalten und bersten, so daß die Druckluft entweichen kann und die Absperrarmatur 1 selbsttätig schließt. Hierdurch wird sichergestellt, daß kein weiteres Gas aus dem der Gas-Druckregelanlage vorgeschalteten Transportsystem zum Brandherd gelangt. Weiterhin wird die Rückströmsicherung 14 wirksam, so daß auch aus dem der Regelanlage nachgeschalteten Leitungssystem kein Brennstoff zum Brandherd zurückströmen kann.

Die parallele Anordnung der Reaktionsleitungen 13 hat den Vorteil, daß systembedingte Fehlauslösungen vermieden werden können. Eine störungsbedingte Reduzierung des Druckes in einem der beiden Faltenbälge 6, beispielsweise durch eine Undichtigkeit hervorgerufen, hätte lediglich eine Teilschließung der Absperrarmatur 1 zur Folge. Diese ließe sich jedoch über eine an die Innendruckmeßvorrichtungen 12 gekoppelte Warnmeldung feststellen, so daß Gegenmaßnahmen eingeleitet werden können. Die Warnmeldung kann ebenso von einem in bzw. an der Absperrarmatur 1 angeordneten Bewegungsmelder abgegeben werden.

Zur Verhinderung einer unbeabsichtigten Auslösung der Schließvorrichtung ist der Körper 5 mittels einer Arretiervorrichtung 15 feststellbar.

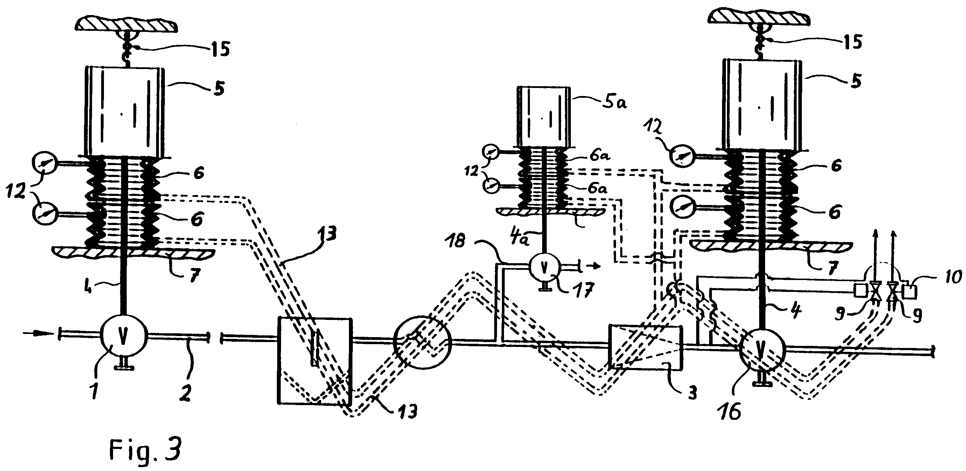

Fig. 3 zeigt den schematischen Aufbau einer Gas-Druckregelanlage und unterscheidet sich von Fig. 2 dadurch, daß die im Ausgang angeordnete Absperrarmatur 16 eine automatische Schließvorrichtung aufweist und somit keine Rückströmsicherung 14 erforderlich ist. Des weiteren ist eine Entleerungsarmatur 17 angeordnet, die über eine Entleerungsleitung 18 mit der Leitungsanlage 2 verbunden ist. Ein nicht dargestelltes Absperrelement der Entleerungsarmatur 17, das mit einer Betätigungsvorrichtung 4a verbunden ist, wird in Geschlossenstellung gehalten. Analog einer automatischen Schließvorrichtung wirken der auf die Betätigungsvorrichtung 4a gerichteten Öffnungskraft zwei druckbeaufschlagte, hintereinander angeordnete Faltenbalge 6a entgegen. Auch hier wird die Öffnungskraft von einem ruhenden Körper 5a aufgebracht.

Beide Faltenbalge 6a sind mit verschiedenen Funktionsleitungen 13 verbunden, ebenso die beiden Faltenbalge 6 der Schließvorrichtung für die Absperrarmatur 16. Die beiden Funktionsleitungen 13 bilden zusammen mit den daran angeschlossenen Faltenbalgen 6 bzw. 6a zwei voneinander getrennte Funktionssysteme.

Der Schließ- bzw. Öffnungsmechanismus der Armaturen 1, 16, 17 ist so eingestellt, daß die Betätigungselemente 4 bzw. 4a nicht auf die Absperrelemente wirken, wenn lediglich Druckluft aus einem der Funktionssysteme entweicht. Erst wenn die Druckluft auch aus dem zweiten Funktionssystem entweicht und die Betätigungselemente 4 bzw. 4a infolge der nachgebenden Faltenbalge 6 bzw. 6a einen definierten Weg zurückgelegt haben, wirken diese auf die Absperrelemente. Dieses kann beispielsweise bei einem als Zahnstange ausgebildeten Betätigungselement mittels eines zahnfreien Abschnittes bewerkstelligt werden.

Im Rahmen der Erfindung sind ohne weiteres Abwandlungsmöglichkeiten gegeben. Es ist nicht notwendig, daß der Hohlkörper der Schließkraft direkt entgegenwirkt. Es ist ausreichend, wenn eine durch den Druckabfall im Hohlkörper erzeugte Bewegung das Auslösen der Schließkraft bewirkt, d. h. der Hohlkörper eine Art Schalterfunktion ausübt. Die Befüllung des Hohlkörpersystems beschränkt sich nicht lediglich auf Druckluft. Beispielsweise eignen sich insbesondere inerte Gase für die Befüllung. Auch der Einsatz von brennbaren Gasen oder von Flüssigkeiten ist denkbar.

Wird der Hohlkörper als Zylinder ausgebildet, bewirkt ein Kolben die Veränderbarkeit des Volumens. Der Kolben ist z. B. direkt mit dem Absperrelement oder über eine Kolbenstange mit einer Betätigungsvorrichtung verbunden, an der auch die Schließkraft angreift. Durch die pneumatische Druckbeaufschlagung wird der Kolben in eine Endlage gedrückt. Das eingeschlossene Gaspolster wirkt der Schließkraft entgegen und hält so die Absperreinrichtung in Offenstellung. Das Schmelzen der Sollbrucheinrichtung bewirkt einen Druckabfall im Zylinder, so daß die Schließkraft wirksam werden kann, der Kolben seine Endlage verläßt und die Absperreinrichtung mittels der Betätigungsvorrichtung in die Schließposition überführt wird.

## Patentansprüche

1. Vorrichtung zum automatischen Schließen einer in einer Leitungsanlage (2) angeordneten Absperrarmatur (1) bei Über- oder Unterschreitung eines zulässigen Druckes in der Leitungsanlage (2), mit einem Absperrelement, mit mindestens einem eine Schließkraft hemmenden Element, das das Absperrelement in Offenstellung hält, und wobei das Element mindestens einen druckbeaufschlagten volumenveränderlichen Hohlkörper (6) aufweist,
dadurch gekennzeichnet,
daß der Hohlkörper (6) mit mindestens einer zu öffnenden Abblasevorrichtung (9) verbunden ist, die eine Auslösevorrichtung (10) aufweist, daß der Auslösevorrichtung (10) über eine Meßleitung (11) der Betriebsdruck der Leitungsanlage (2) zuführbar ist, und daß die Auslösevorrichtung (10) bei Über- oder Unterschreitung des zulässigen Druckes in der Leitungsanlage (2) das Öffnen der Abblasevorrichtung (9) bewirkt.

2. Vorrichtung nach Anspruch 1,
dadurch gekennzeichnet, daß
die Abblasevorrichtung (9) über eine Funktionsleitung (13) mit dem Hohlkörper (6) verbunden ist, wobei die Funktionsleitung (13) aus einem Material besteht, dessen Schmelztemperatur auf eine definierte Grenzwerttemperatur eingestellt ist.

3. Vorrichtung nach Anspruch 1 oder 2,
dadurch gekennzeichnet, daß
die Schließkraft von einem Betätigungselement (5) aufgebracht wird, welches an einer Betätigungsvorrichtung (4) angreift.

4. Vorrichtung nach einem der Ansprüche 1 bis 3,
dadurch gekennzeichnet, daß
der Hohlkörper (6) an der Betätigungsvorrichtung (4) oder direkt an dem Betätigungselement (5) angreift.

5. Vorrichtung nach einem der Ansprüche 1 bis 4,
dadurch gekennzeichnet, daß
der Hohlkörper (6) eine Drucküberwachungseinrichtung (12) aufweist.

6. Vorrichtung nach einem der Ansprüche 2 bis 5,
dadurch gekennzeichnet, daß
mindestens zwei Hohlkörper (6) hintereinander und die zugehörigen Funktionsleitungen (13) parallel zueinander angeordnet sind.

7. Vorrichtung nach einem der Ansprüche 1 bis 6,
dadurch gekennzeichnet, daß
das Betätigungselement (5) oder die Betätigungsvorrichtung (4) oder das Absperrelement mittels einer Arretiervorrichtung (15) feststellbar ist.

8. Vorrichtung nach einem der Ansprüche 1 bis 7,
dadurch gekennzeichnet, daß
das Volumen des als Zylinder ausgebildeten Hohlkörpers (6) mittels eines Kolbens veränderbar ist, wobei dieser über eine Kolbenstange mit der Betätigungsvorrichtung (4) verbunden ist.

9. Vorrichtung nach einem der Ansprüche 1 bis 7,
dadurch gekennzeichnet, daß
der Hohlkörper (6) als Faltenbalg oder als Druckkissen ausgebildet ist.

10. Vorrichtung nach einem der Ansprüche 2 bis 9, mit einer im Eingang und einer im Ausgang der Leitungsanlage (2) angeordneten Absperrarmatur (1, 16),
dadurch gekennzeichnet, daß
die Leitungsanlage (2) zwischen den Absperrarmaturen (1, 16) mit mindestens einer Entleerungsarmatur (17) verbunden ist, die ein Absperrelement aufweist, mit mindestens einem eine Öffnungskraft hemmenden druckbeaufschlagten Hohlkörper (6a), der das Absperrelement in Geschlossenstellung hält, daß der Hohlkörper (6a) mit der Funktionsleitung (13) verbunden ist, und daß ein Druckabfall in der Funktionsleitung (13) einen Druckabfall im Hohlkörper (6a) bewirkt, so daß die Entleerungsarmatur (17) öffnet.

11. Vorrichtung nach Anspruch 10,
dadurch gekennzeichnet, daß
der Druckabfall im Hohlkörper (6a) mittels eines Drosselgliedes verzögert wird.

12. Vorrichtung nach Anspruch 10 oder 11,
dadurch gekennzeichnet, daß
zwei Entleerungsarmaturen (17) in Reihe angeordnet sind.

## Claims

1. Device for automatically closing a shut-off valve (1) arranged in a pipeline facility (2) when an admissible pressure is exceeded or undershot in said pipeline facility (2), said device having a shut-off element, at least one element inhibiting a closing force, holding the shut-off element in the open position and exhibiting at least one hollow body (6) which is pressurised and whose volume can be changed,
characterised in that the hollow body (6) is connected with at least one venting device (9) which can be opened and which has a triggering device (10), that the operating pressure of said pipeline facility (2) can be fed to the triggering device (10) via a metering line (11), and that the triggering device (10) causes the venting device (9) to open when the admissible pressure in the pipeline facility (2) is exceeded or undershot.

2. Device according to claim 1,
characterised in that
the venting device (9) is connected to the hollow body (6) via a function line (13), the function line (13) being made of a material whose melt temperature is set to a defined threshold temperature.

3. Device according to claim 1 or 2,
characterised in that
the closing force is applied by an actuating element (5) which acts on an actuating device (4).

4. Device according to any one of claims 1 through 3,
characterised in that
the hollow body (6) acts on the actuating device (4) or directly on the actuating element (5).

5. Device according to any one of claims 1 through 4,
characterised in that
the hollow body (6) has a pressure-monitoring facility (12).

6. Device according to any one of claims 2 through 5,
characterised in that
at least two hollow bodies (6) are arranged downstream of each other and the appertaining function lines (13) are arranged parallel to each other.

7. Device according to any one of claims 1 through 6,
characterised in that
the actuating element (5) or the actuating device (4) or the shut-off element can be fixed via a fixing device (15).

8. Device according to any one of claims 1 through 7,
characterised in that
the volume of the hollow body (6) designed as a cylinder can be changed by means of a piston which is connected to the actuating device (4) via a piston rod.

9. Device according to claims 1 through 7,
characterised in that
the hollow body (6) is designed as a bellows or as a pressure cushion.

10. Device according to any one of claims 2 through 9 having a shut-off valve (1) arranged in the inlet of the pipeline facility (2) and a shut-off valve (16) arranged in the outlet of the pipeline facility
characterised in that
the pipeline facility (2) is connected between the shut-off elements (1,16) to at least one drainage valve (17), which exhibits a shut-off element, with at least one pressurised hollow body (6a) inhibiting an opening force and holding the shut-off element in the closed position, that the hollow body (6a) is connected to the function line (13) and that a drop in pressure in the function line (13) causes a drop in pressure in the hollow body (6a) such that the drainage valve (17) opens.

11. Device according to claim 10,
characterised in that
the drop in pressure in the hollow body (6a) is delayed by means of a throttle element.

12. Device according to claim 10 or 11,
characterised in that
two drainage valves (17) are arranged in series.

## Revendications

1. Dispositif de fermeture automatique d'un robinet d'arrêt (1) installé dans une conduite (2), actionné en cas de dépassement vers le haut ou le bas d'une pression admissible dans ladite conduite (2) et comprenant un élément de verrouillage doté d'au moins un élément enrayant une force de fermeture, maintenant l'élément de verrouillage en position d'ouverture et disposant d'au moins un corps creux (6) sous pression et d'un volume variable,
caractérisé par le fait
que le corps creux (6) est raccordé à au moins un dispositif de mise à l'évent (9) ouvrable, comprenant un dispositif de déclenchement (10), que la pression de service de la conduite (2) peut être amenée audit dispositif de déclenchement (10) par l'intermédiaire d'une ligne de mesure (11) et que ledit dispositif de déclenchement (10) provoque l'ouverture du dispositif de mise à l'évent (9) en cas de dépassement vers le haut ou le bas de la pression admissible dans la conduite (2).

2. Dispositif selon la revendication 1,
caractérisé par le fait
que le dispositif de mise à l'évent (9) est raccordé par une ligne de fonctionnement (13) au corps creux (6), la ligne de fonctionnement (13) consistant d'un matériau dont la température de fusion est réglée sur une température limite prédéterminée.

3. Dispositif selon l'un quelconque des revendications 1 ou 2,
caractérisé par le fait
que la force de fermeture est provoquée par un élément d'actionnement (5) agissant sur un dispositif d'actionnement (4).

4. Dispositif selon l'une quelconque des revendications 1 à 3,
caractérisé par le fait
que le corps creux (6) agit sur le dispositif d'actionnement (4) ou directement sur l'élément d'actionnement (5).

5. Dispositif selon l'une quelconque des revendications 1 à 4,
caractérisé par le fait
que le corps creux (6) est doté d'une surveillance de la pression (12).

6. Dispositif selon l'une quelconque des revendications 2 à 5,
caractérisé par le fait
qu'au moins deux corps creux (6) sont disposés l'un derrière l'autre et que les lignes de fonctionnement (13) correspondantes sont disposées en parallèle l'une par rapport à l'autre.

7. Dispositif selon l'une quelconque des revendications 1 à 6,
caractérisé par le fait
que l'élément d'actionnement (5) ou le dispositif d'actionnement (4) ou l'élément de verrouillage peuvent être arrêtés moyennant un dispositif d'arrêt (15).

8. Dispositif selon l'une quelconque des revendications 1 à 7,
caractérisé par le fait
que le volume du corps creux (6), de forme cylindrique, peut être modifié par un piston relié par une tige de piston au dispositif d'actionnement (4).

9. Dispositif selon l'une quelconque des revendications 1 à 7,
caractérisé par le fait
que le corps creux (6) est conçu sous forme de soufflet ou de coussin de pression.

10. Dispositif selon l'une quelconque des revendications 2 à 9, muni à l'entrée et à la sortie de la conduite (2) d'un robinet d'arrêt (1, 16),
caractérisé par le fait
qu'entre les robinets d'arrêt (1, 16) la conduite (2) est raccordée à au moins un robinet de purge (17) doté d'un élément d'arrêt avec au moins un corps creux (6a) sous pression enrayant une force d'ouverture et maintenant l'élément d'arrêt en position de fermeture, que le corps creux (6a) est relié à la ligne de fonctionnement (13) et qu'une chute de pression dans la ligne de fonctionnement (13) provoque une chute de pression dans le corps creux (6a) de façon à ce que le robinet de purge s'ouvre.

11. Dispositif selon la revendication 10,
caractérisé par le fait
que la chute de pression dans le corps creux (6a) est retardée par un organe de laminage.

12. Dispositif selon l'une quelconque des revendications 10 ou 11,
caractérisé par le fait
que deux robinets de purge (17) sont disposés en série.
